# EUROPÄISCHE PATENTSCHRIFT

(11) **EP 2 164 724 B1**
(45) Veröffentlichungstag und Bekanntmachung des Hinweises auf die Patenterteilung: **09.01.2019**
(21) Anmeldenummer: 08802086.2
(22) Anmeldetag: 12.09.2008
(51) Int. Cl.: B60P 7/15

(54) **HALTEVORRICHTUNG FÜR FAHRZEUGINNENRÄUME**
RETAINING DEVICE FOR VEHICLE INTERIORS
DISPOSITIF DE RETENUE POUR HABITACLES DE VÉHICULES

(30) Priorität: 18.09.2007 EP 07043743
(43) Veröffentlichungstag der Anmeldung: 24.03.2010
(73) Patentinhaber: TANOS GmbH Verpacken Ordnen Präsentieren, 89257 Illertissen (DE)
(72) Erfinder: KOENIG, Andreas, 89291 Holzheim (DE); RITTLER, Jürgen, 89079 Ulm-Gögglingen (DE); WOLLE, Lutz, 89233 Neu-Ulm (DE)
(74) Vertreter: Patentanwälte Magenbauer & Kollegen Partnerschaft mbB
(86) Internationale Anmeldenummer: PCT/EP2008/007526
(87) Internationale Veröffentlichungsnummer: WO 2009/036928

(56) Entgegenhaltungen:
- EP-A- 1 568 541
- DE-U1- 20 106 403
- US-A- 5 281 063
- US-A1- 2002 176 759
- US-A1- 2004 156 692

## Beschreibung

Die Erfindung betrifft eine Haltevorrichtung für Fahrzeuginnenräume, insbesondere als Bestandteil eines Aufbewahrungssystems für in einem Fahrzeug mitzuführende Gegenstände, mit mindestens einer Haltestrebe, die eine längeneinstellbare Stangenstruktur sowie zwei an den einander entgegengesetzten Stirnseiten der Stangenstruktur angeordnete plattenförmige Stützglieder aufweist und die lösbar derart in einem Fahrzeuginnenraum montierbar ist, dass sie sich zwischen zwei sich gegenüberliegenden Fahrzeugwänden erstreckt und sich mit ihren beiden Stützgliedern flächenhaft an diesen Fahrzeugwänden abstützt, wobei einem oder beiden Stützgliedern zur lösbaren Befestigung an der jeweils zugeordneten Fahrzeugwand eine Haftverschlusseinrichtung mit lösbar miteinander verbindbaren Haftverschlussflächen zugeordnet ist, wobei die Haftverschlusseinrichtung eine an der der Stangenstruktur abgewandten Seite am Stützglied angeordnete erste Haftverschlussfläche sowie eine im Gebrauchszustand an der zugeordneten Fahrzeugwand angebrachte, zur lösbaren Haftverbindung mit der ersten Haftverschlussfläche vorgesehene zweite Haftverschlussfläche aufweist.

Eine aus der EP 1 568 541 A2 bekannte Haltevorrichtung enthält mehrere in einem Laderaum eines Kraftfahrzeuges montierbare Haltestreben, die als tragende Elemente eines Aufbewahrungssystems für in dem Fahrzeug mitzuführende Gegenstände fungieren. An den Haltestreben können beispielsweise Ablageelemente fixiert werden, auf denen sich Werkzeuge, Behälter oder sonstige Gegenstände abstellen lassen. Es kann auch jede Haltestrebe für sich allein genutzt werden, um zu transportierende Gegenstände während ihres Transports in ihrer Lage zu sichern.

Eine vergleichbare Haltevorrichtung mit anderem Detailaufbau der Haltestrebe ist auch aus der DE 102 38 962 B4 bekannt.

In beiden bekannten Fällen wird die mindestens eine Haltestrebe zum Zwecke ihrer eigenen Fixierung zwischen zwei sich gegenüberliegenden Fahrzeugwänden kräftig verspannt, wobei es sich in der Regel um den Fahrzeugboden und die Fahrzeugdecke handelt. Mittels einer in die Stangenstruktur integrierten Gewindeanordnung lässt sich die Stangenstruktur axial auseinanderschrauben und dadurch die erforderliche Vorspannung aufbauen.

Wie sich jedoch gezeigt hat, verfügen vor allem Kraftfahrzeuge neueren Baujahrs sehr häufig in den für das Ansetzen der Stützglieder geeigneten Wandabschnitten über eine nur geringe Struktursteifigkeit. Es besteht daher die Gefahr, dass sich die Fahrzeugwände beim Festspannen einer Haltestrebe verformen, so dass zum einen der gewünschte Halt nicht gewährleistet werden kann und zum anderen auch das Risiko von Beschädigungen am Fahrzeug selbst besteht.

Aus der US 5 281 063 A ist eine Haltevorrichtung der eingangs genannten Art bekannt, die eine oder mehrere zwischen zwei Fahrzeugwänden verspannbare Haltestreben aufweist, die jeweils über eine Stangenstruktur verfügen, die mittels endseitig angeordneten Haftverschlusseinrichtungen lösbar an den Fahrzeugwänden fixierbar ist.

Aus der US 2002/0150439 A1 ist eine teleskopierbare Stange bekannt, die dadurch an den Seitenwänden eines Fahrzeuges fixierbar ist, dass sie stirnseitig in Schalen eingesteckt wird, die mittels Klebstoff oder mechanischen Befestigungselementen an den genannten Seitenwänden befestigt sind.

Die WO 2004/043742 A2 beschreibt die Befestigung eines stangenförmigen Halteelementes mittels stirnseitig ansteckbaren Trägern, die lösbar an Seitenwänden eines Fahrzeuges fixierbar sind, beispielsweise mittels einem Klebeband, einem Klettverschluss oder einer Rastverbindung.

Aus der US 5,281,063 sind zur Fixierung von Ladung dienende Stangen bekannt, die jeweils unter Zwischenschaltung eines Halteelementes an einer Fahrzeugwand festlegbar sind. Die Halteelemente können mittels Klettverschlussmaterial oder Klebstoff befestigt werden.

Die US 5,865,580 offenbart eine Abtrenneinrichtung für die Ladefläche eines Fahrzeuges. Sie besteht aus einzelnen T-förmigen Segmenten, die flexibel miteinander verbunden sind. An der Unterseite ihrer Füße sind die Segmente mit rutschhemmenden Vorsprüngen versehen.

Aus der EP 1 721 781 A2 geht eine einstellbare Vorrichtung zur Stabilisierung von Lasten hervor. Sie enthält zwei axial teleskopierbare Stangenelemente mit stirnseitigen Abstützplatten. Mittels Klebeelementen können die Abstützplatten an den zu stabilisierenden Lasten anhaften.

Es ist eine Aufgabe der vorliegenden Erfindung, eine Haltevorrichtung der eingangs genannten Art zu schaffen, die sich ohne Beschädigungsgefahr für die Fahrzeugwände auf sichere Weise in einem Fahrzeuginnenraum montieren lässt.

Zur Lösung dieser Aufgabe ist vorgesehen, dass das plattenförmige Stützglied eine Befestigungsplatte aufweist, an deren der Stangenstruktur abgewandter Vorderseite die erste Haftverschlussfläche angeordnet ist und die über derartige biegeflexible Eigenschaften verfügt, dass sie zum Lösen der zwischen den beiden Haftverschlussflächen vorliegenden Haftverbindung durch Umbiegen und Ziehen von der zweiten Haftverschlussfläche abziehbar ist.

Es wäre prinzipiell möglich, die miteinander kooperierenden Haftverschlussflächen als Selbstklebeflächen auszubilden. Als besonders vorteilhaft wird allerdings eine Ausgestaltung der Haftverschlusseinrichtung als Klettverschlusseinrichtung angesehen, bei der die Haftverschlussflächen über lösbar miteinander verhakbare Haftstrukturen verfügen. Klettverschlusseinrichtungen haben gegenüber rein adhäsiven Haftverschlusseinrichtungen den Vorteil, dass sie praktisch beliebig oft wiederverwendbar sind, ohne dass die Haftkraft nachlässt und ohne dass die Haftverschlussflächen verschmutzen.

Ungeachtet der konkreten Realisierungsform hat die fahrzeugseitige Fixierung der Stützglieder mittels Haftverschlusseinrichtungen den Vorteil, dass die Stangenstruktur hohe Querkräfte aufnehmen kann, ohne dass eine besondere Vorspannung zwischen der Haltestrebe und den Fahrzeugwänden aufgebaut wird. Eine Haltestrebe ist also auch dann sicher fixierbar, wenn die Stützglieder nicht mit ausgeprägter Vorspannung an die Fahrzeugwände angedrückt werden. Die Haftverschlusseinrichtung verhindert auch ohne besondere Vorspannung ein verrutschungssicheres Festhalten eines Stützgliedes an der Fahrzeugwand und sorgt für die benötigte Stabilität. Mithin lassen sich auch solche Fahrzeuginnenräume mit einer oder mehreren Haltestreben ausstatten, deren Fahrzeugwände keine ausgeprägte Struktursteifigkeit hinsichtlich drückenden Beaufschlagungen aufweisen.

Wird eine Haltestrebe sich zwischen dem Fahrzeugboden und dem Fahrzeugdach erstreckend installiert, könnte das bodenseitige Stützglied unter Umständen auch auf andere Weise als mittels einer Haftverschlusseinrichtung fixiert werden. Oftmals verfügen Fahrzeuginnenräume über ab Werk am Boden verankerte Befestigungsstrukturen, die dann zur verrutschungssicheren Fixierung des unteren Stützgliedes genutzt werden könnten. Allerdings lässt sich die Haltevorrichtung wesentlich universeller und unabhängig vom Fahrzeugtyp verwenden, wenn beide Stützglieder einer Haltestrebe zur Fixierung mittels einer Haftverschlusseinrichtung ausgebildet sind.

Die Haftverschlusseinrichtung verfügt über eine an der der Stangenstruktur abgewandten Seite am Stützglied angeordnete erste Haftverschlussfläche sowie über eine damit kooperierende zweite Haftverschlussfläche, die im Gebrauchszustand an der zugeordneten Fahrzeugwand angebracht ist. Das Stützglied verfügt über eine Befestigungsplatte, die an der der Stangenstruktur abgewandten Seite die erste Haftverschlussfläche aufweist und über biegeflexible Eigenschaften verfügt, so dass sich die Haftverbindung im Falle einer notwendigen Demontage einer Haltestrebe sehr leicht wieder aufheben lässt, indem man die Befestigungsplatte einschließlich der daran angeordneten ersten Haftverschlussfläche durch Umbiegen und Ziehen von der zweiten Haftverschlussfläche abzieht.

Vorteilhafte Weiterbildungen der Erfindung gehen aus den Unteransprüchen hervor.

Es wäre theoretisch möglich, die Fahrzeugwand eines Fahrzeugs schon ab Werk derart auszubilden, dass ihre Innenfläche zumindest partiell für das Ausbilden einer Haftverschlusseinrichtung geeignet ist, beispielsweise durch Ausstattung mit einer Veloursverkleidung, unter deren Verwendung sich eine Klettverschlusseinrichtung realisieren lässt. Um universell einsetzbar zu sein, beinhaltet die Haltevorrichtung jedoch zweckmäßigerweise zur Vorgabe der zweiten Haftverschlussfläche mindestens eine bevorzugt flexible Haftverschlussmatte, an der die zweite Haftverschlussfläche ausgebildet ist und die sich in lösbarer Weise an einer Fahrzeugwand auch nachträglich fixieren lässt.

Die Haftverschlussmatte kann rückseitig insbesondere mit einer Selbstklebeschicht versehen sein, die das variable Festkleben an einer Fahrzeugwand ermöglicht. Pro Stützglied kann bei ausreichender Größe auf eine einzige Haftverschlussmatte zurückgegriffen werden, jedoch besteht auch die Möglichkeit, die zweite Haftverschlussfläche durch mehrere nebeneinander angeordnete kleinere Haftverschlussmatten zu realisieren.

Die Flexibilität der Haftverschlussmatte gewährleistet eine optimale Anpassung an unebene Wandkonturen der Fahrzeugwand. Die Haftverschlussmatte kann sich unter Ausbildung einer sicheren Verbindung an die Innenfläche der Fahrzeugwand anschmiegen.

Für beide Haftverschlussflächen gilt, dass die Außenkontur prinzipiell beliebig ist, sich aber vor allem rechteckige oder kreisförmige Umrisse empfehlen dürften. Vorteilhaft ist jedenfalls, wenn sich der Verbindungsbereich zwischen der Stangenstruktur und einem Stützglied im Zentrum des Stützgliedes befindet und somit die Haftverschlussflächen rings um dieses Zentrum herum angeordnet sind, so dass aus allen Richtungen angreifende Querkräfte sicher aufgenommen werden können.

Der Einsteckstutzen wird zweckmäßigerweise von der Stützplatte getragen und kann mit dieser verschraubt sein. Damit die von der Stangenstruktur in das Stützglied eingeleiteten Querkräfte möglichst nahe bei der Stützplatte liegen und folglich kaum Kippmomente eingeleitet werden, die möglicherweise ein Lösen der beiderseitigen Haftverschlussflächen zur Folge haben könnten, verfügt der Einsteckstutzen bevorzugt über eine sich zu seinem freien Ende hin verjüngende konische Außenfläche und die Steckaufnahme ist in ihrem Querschnitt derart daran angepasst, dass der Kontaktbereich auf einen sehr schmalen, kreislinienförmigen Bereich an der nahe bei der Befestigungsplatte liegenden Mündung der Steckaufnahme begrenzt ist. Die Krafteinleitungsstelle, an der die Stangenstruktur Querkräfte in den Einsteckstutzen und mithin das Stützglied einleiten kann, kann auf diese Weise in die unmittelbare Nähe zur Befestigungsplatte verlegt werden.

Das Zusammenwirken zwischen dem konischen Einsteckstutzen und der Steckaufnahme - Letztere ist insbesondere kreiszylindrisch gestaltet - ermöglicht auch gewisse begrenzte Kippbewegungen zwischen dem Stützglied und der Stangenstruktur, so dass sich die beiden Teile winkelmäßig gegenseitig ausrichten können, wenn bedingt durch die örtlichen Gegebenheiten eine exakt rechtwinkelige Ausrichtung nicht möglich ist.

Die Längeneinstellbarkeit der Stangenstruktur ermöglicht ein bequemes Anpassen der Länge der Haltestrebe an den Abstand zwischen den sich gegenüberliegenden Fahrzeugwänden und erleichtert die Demontage, wenn die Haltestrebe nicht mehr benötigt wird.

Insbesondere wenn zwischen dem Stützglied und der Stangenstruktur eine lösbare Verbindung vorliegt, besteht auch die Möglichkeit, während Nichtgebrauchszeiten die Stangenstruktur zu entfernen und eines oder beide Stützglieder an Ort und Stelle zu belassen.

Darüber hinaus hat man auch die Möglichkeit, die Haltestrebe in ihrer Gesamtheit zu entfernen, die fahrzeugseitig angeordneten Haftverschlussflächen jedoch bis zum neuerlichen Gebrauch zu belassen. Damit diese Haftverschlussflächen während der Zeit ihres Nichtgebrauches nicht beschädigt werden, können sie abgedeckt werden, wobei man die Abdeckmittel zweckmäßigerweise auch durch komplementäre Haftverschlussflächen anbringt.

Die Einstellbarkeit der Länge der Stangenstruktur lässt sich beispielsweise dadurch realisieren, dass man eine den größten Teil des zwischen sich gegenüberliegenden Fahrzeugwänden vorhandenen Abstandes überbrückende Hauptstange und ein diesbezüglich axial verstellbar in Eingriff stehendes Längenanpassteil vorsieht. Das Längenanpassteil kann als Schraubteil oder als Verschiebeteil ausgebildet sein. Für variable Anwendungen können Hauptstangen unterschiedlicher Baulänge zur Verfügung gestellt werden, die nach Bedarf genutzt und mit standardisierten Längenanpassteilen ausgerüstet werden können. Unterschiedlich lange Hauptstangen lassen sich auch durch Kombination mehrerer Stangenelemente realisieren.

Nachfolgend wird die Erfindung anhand der beiliegenden Zeichnung näher erläutert. In dieser zeigen:
- Figur 1: ein unter Verwendung zweier erfindungsgemäßer Haltestreben bevorzugten Aufbaus verwirklichtes Aufbewahrungssystem im in einem Fahrzeuginnenraum montierten Zustand, wobei zwei mit den Haltestreben zusammenwirkende Fahrzeugwände strichpunktiert angedeutet sind,
- Figur 2: eine Einzeldarstellung von einer der in Figur 1 verwendeten Haltestreben im zwischen zwei strichpunktiert angedeuteten Fahrzeugwänden montierten Zustand,
- Figur 3: den in Figur 2 strichpunktiert markierten Ausschnitt III in einer vergrößerten Darstellung im Längsschnitt,
- Figur 4: den oberen Endbereich der aus Figur 3 ersichtlichen Anordnung bei getrennter Haftverschlusseinrichtung und noch nicht an der Fahrzeugwand montierter Haftverschlussfläche,
- Figur 5: den oberen Endbereich der aus Figur 3 ersichtlichen Anordnung während der Phase des Abnehmens eines Stützgliedes durch Lösen der Haftverschlusseinrichtung,
- Figur 6: die Anordnung aus Figur 3 in einer perspektivischen Explosionsdarstellung,
- Figur 7: den in Figur 2 strichpunktiert markierten Bereich VII in einer vergrößerten Darstellung im Längsschnitt,
- Figur 8: den oberen Endabschnitt einer modifizierten Bauform der Haltestrebe in einem mit Figur 4 vergleichbaren Montagezustand, und
- Figur 9: die Anordnung aus Figur 8 in einer perspektivischen Explosionsdarstellung.

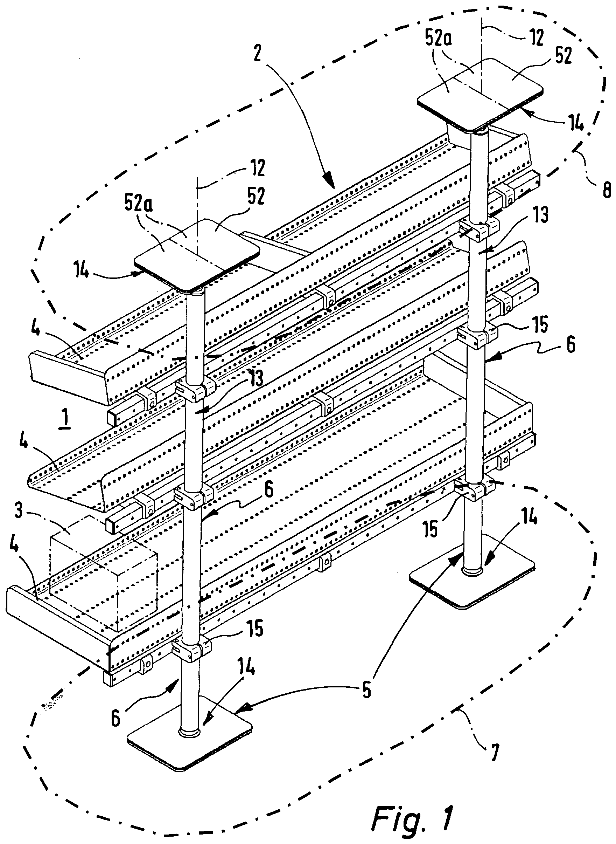

Die Figur 1 zeigt ein in einem Fahrzeuginnenraum 1, insbesondere ein Laderaum, eines Kraftfahrzeuges installiertes Aufbewahrungssystem 2 für zu transportierende Gegenstände, von denen exemplarisch einer bei 3 angedeutet ist. In der beispielhaft gezeigten Ausstattung verfügt das Aufbewahrungssystem 2 über mehrere übereinander angeordnete und sich horizontal erstreckende Ablageelemente 4, beispielsweise Fachböden, Wannen oder Lochbleche, die an einer im Fahrzeuginnenraum 1 befestigten Haltevorrichtung 5 angeordnet sind. Die Haltevorrichtung 5 umfasst mindestens eine und exemplarisch zwei Haltestreben 6, die derart montiert sind, dass sie sich zwischen zwei sich gegenüberliegenden Fahrzeugwänden 7, 8 erstrecken und den dazwischen vorhandenen Freiraum überbrücken.

Bevorzugt werden die Haltestreben 6 mit vertikaler Ausrichtung montiert, wobei ihre Längsachse 12 in vertikaler Richtung verläuft. Dabei können sie sich zwischen einer vom Fahrzeugboden gebildeten ersten Fahrzeugwand 7 und einer vom Fahrzeugdach gebildeten zweiten Fahrzeugwand 8 erstrecken. Eine Montage mit anderer Ausrichtung ist jedoch ebenfalls möglich, beispielsweise mit horizontalem Verlauf zwischen zwei Fahrzeugseitenwänden.

Entsprechend der Ausbaustufe des Aufbewahrungssystems 2 kann die Haltevorrichtung durchaus auch eine noch höhere Anzahl von Haltestreben 6 aufweisen, die anwendungsspezifisch auch mit untereinander verschiedener Ausrichtung montiert sein können.

Jede Haltestrebe 6 verfügt über eine sich in Richtung der Längsachse 12 erstreckende längeneinstellbare Stangenstruktur 13 und über zwei an den einander entgegengesetzten Stirnseiten dieser Stangenstruktur 13 angeordnete plattenförmige Stützglieder 14. Über ihre beiden Stützglieder 14 stützt sich jede Haltestrebe 6 großflächig an der zugeordneten Fahrzeugwand 7, 8 ab.

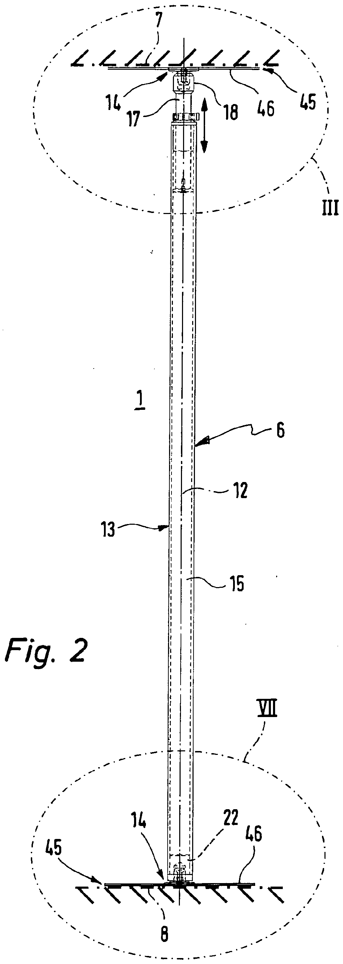

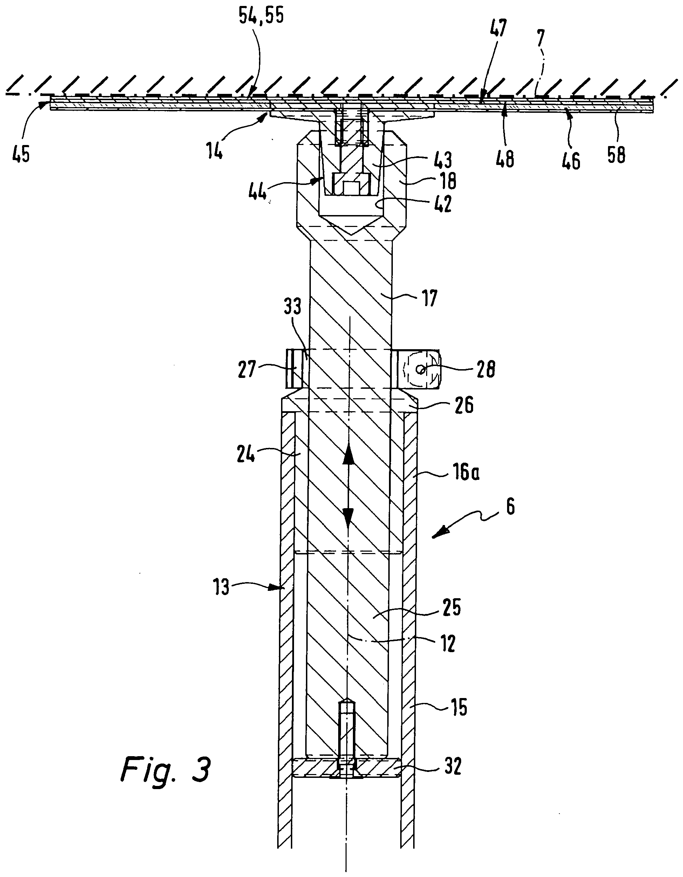

Die Haltestreben 6 sind lösbar in dem Fahrzeuginnenraum 1 montierbar, so dass sie sich bei Nichtgebrauch wieder entfernen lassen, ohne die Fahrzeugwände 7, 8 in Mitleidenschaft zu ziehen. Da die beiden Haltestreben 6 identisch aufgebaut sind, kann sich ihre weitere Beschreibung unter Bezugnahme auf die Figuren 2 bis 9 an einer dieser Haltestreben 6 orientieren. Zu erwähnen ist noch, dass die Ablageelemente 4 an der jeweiligen Stangenstruktur 13 festlegbar sind, insbesondere unter Mitwirkung von Klemmbefestigungsteilen 15, die sich an den Außenumfang der Stangenstruktur 13 in variabler Höhe lösbar anklemmen lassen.

Selbstverständlich kann die Haltevorrichtung 5 auch über nur eine Haltestrebe 6 verfügen. Die Anzahl hängt vor allem vom jeweiligen Anwendungszweck ab.

Die Stangenstruktur 13 ist zur Anpassung an den zwischen den beiden Fahrzeugwänden 7, 8 vorhandenen Abstand längenmäßig einstellbar. Zu diesem Zweck ist sie beim Ausführungsbeispiel in axialer Richtung mehrteilig ausgebildet und enthält eine bevorzugt rohrförmige Hauptstange 15 sowie ein an einem ersten Endabschnitt 16a der Hauptstange 15 koaxial in diese eingreifendes, in Längsrichtung der Hauptstange 15 verstellbares Längenanpassteil 17. Das Längenanpassteil 17 ist stangenförmig ausgebildet und verfügt an seinem aus der Hauptstange 15 herausragenden Ende über einen Aufnahmekopf 18 zur Kopplung mit einem der Stützglieder 14.

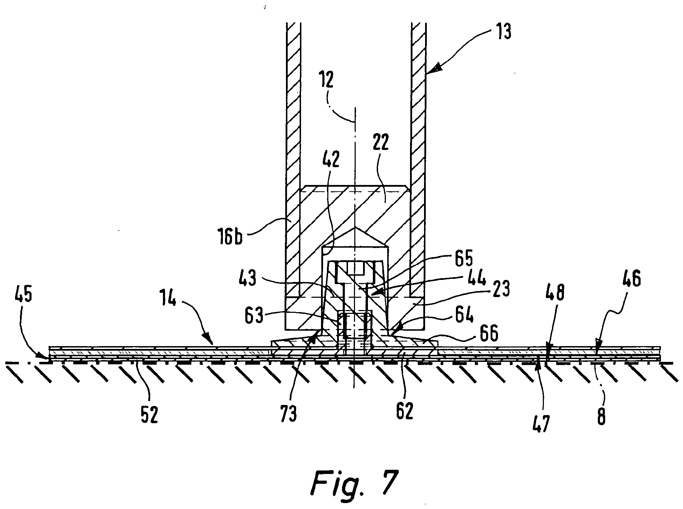

Ein zur Kopplung mit dem anderen, zweiten Stützglied 14 dienendes Aufnahmeelement 22 ist am entgegengesetzten zweiten Endabschnitt 16b der Hauptstange 15 angeordnet (Figur 7). Letzteres greift zwar exemplarisch auch koaxial in die Hauptstange 15 ein, stützt sich jedoch axial unbeweglich an dem zweiten Endabschnitt 16b ab. Hierzu ragt es mit einem ringförmigen Anschlagbund 23 vor die Stirnfläche des zweiten Endabschnittes 16b.

Das Aufnahmeelement 22 ist beim Ausführungsbeispiel lose eingesteckt und kann deshalb leicht ausgetauscht werden. Eine Schraubverbindung oder andere Befestigungsart wäre jedoch ebenfalls denkbar.

Das Längenanpassteil 17 durchgreift mit einem sich an den Aufnahmekopf 18 anschließenden Einstellabschnitt 25 eine in den ersten Endabschnitt 16a eingesteckte, sich bezüglich der Hauptstange 15 axial unbeweglich abstützende Führungshülse 24. Die Einstecktiefe ist durch einen Anschlagbund 26 begrenzt, der an der Stirnfläche des ersten Endabschnittes 16a anliegt.

Bei dem Ausführungsbeispiel der Figuren 2 bis 7 ist das Längenanpassteil 17 als Verschiebeteil ausgebildet, das mit seinem Einstellabschnitt 25 in Richtung der Längsachse 12 verschiebbar in der Führungshülse 24 geführt ist. Je nach Relativposition ragt es hier mehr oder weniger weit aus der Hauptstange 15 heraus. Dementsprechend lässt sich die zwischen dem Aufnahmekopf 18 und dem Aufnahmeelement 22 gemessene Länge der Stangenstruktur 13 insbesondere stufenlos variieren. Es liegt praktisch ein Teleskopmechanismus vor.

Fixiert wird die gewünschte Länge durch eine als Schnellspannvorrichtung fungierende Klemmschelle 27, die das Längenanpassteil 17 außerhalb der Hauptstange 15 an dem Einstellabschnitt 25 umgreift und mittels eines Spannmechanismus 28 manuell auf dem Einstellabschnitt 25 festklemmbar ist. Die Klemmschelle 27 umgreift einen geschlitzten Kragen 33 der Führungshülse 24 und verspannt diesen mit der glatten Außenfläche des Einstellabschnittes 25 und fixiert dadurch die gewünschte Länge der Stangenstruktur 13.

Durch kurzzeitiges Lösen der Klemmschelle 27 kann das Längenanpassteil 17 zur Verkürzung der Hauptstange 15 weiter eingeschoben oder zur Verlängerung der Hauptstange 15 weiter herausgezogen werden.

An der in der Hauptstange 15 liegenden Stirnseite des Einstellabschnittes 25 kann eine radial vorstehende Führungsscheibe 32 angeordnet sein, die mit der Innenfläche der rohrförmigen Hauptstange 15 kooperiert, um das Längenanpassteil 17 quer abzustützen und ergänzend zur Führungshülse 24 zu führen. Dadurch wird auch eventuelles Spiel kompensiert, das zwischen dem ersten Endabschnitt 16a und der in diesen eingesteckten Führungshülse 24 eventuell vorliegt.

Die Führungsscheibe 32 bildet auch ein Anschlagelement, das ein versehentlich zu weites Herausziehen des Längenanpassteils 17 aus der Hauptstange 15 verhindert. Die Führungsscheibe 32 läuft dann auf die innere Stirnfläche der eingesteckten Führungshülse 24 auf.

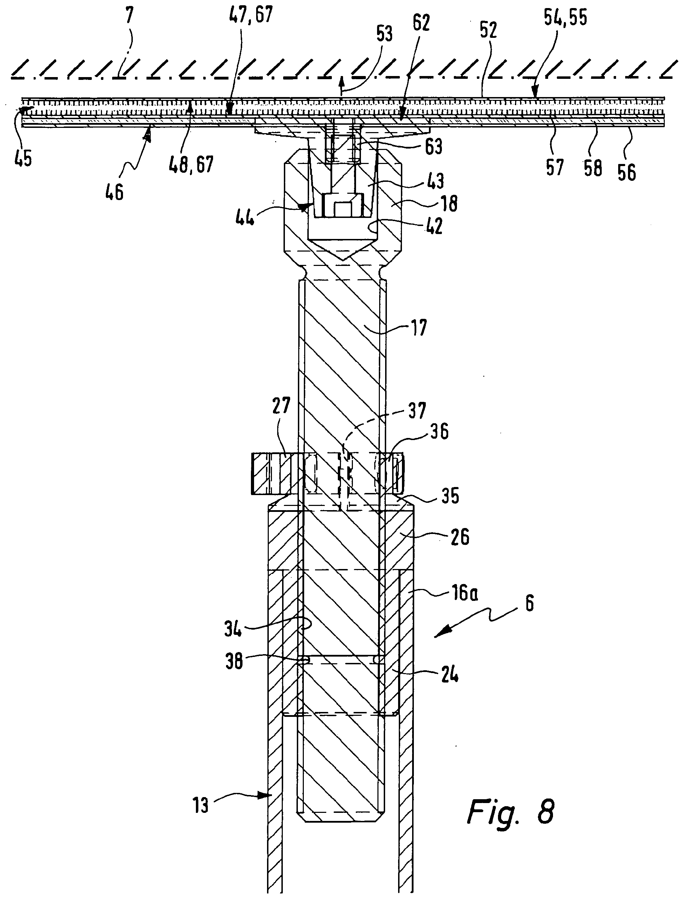

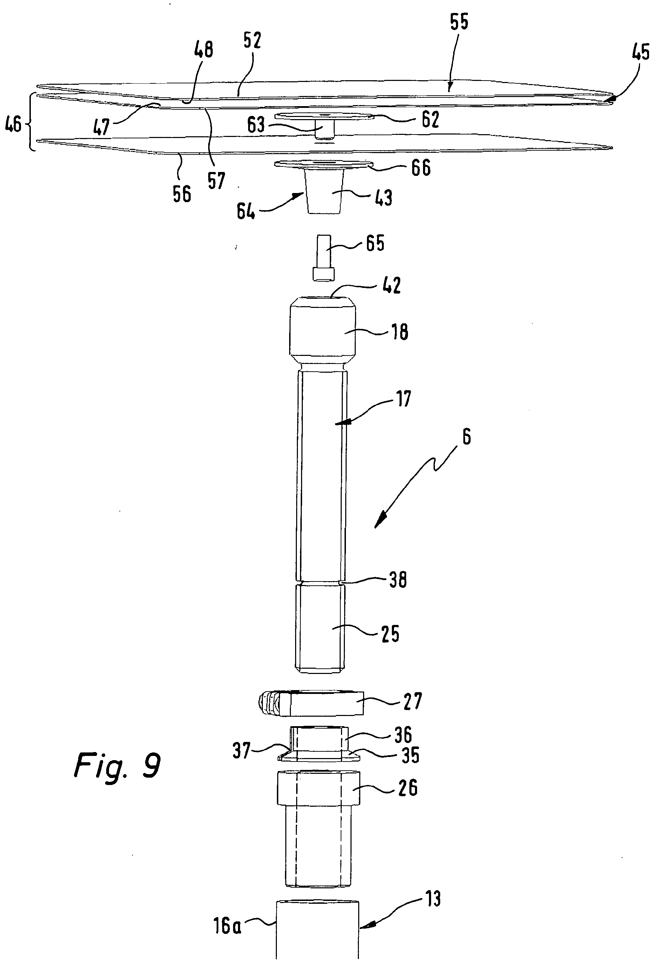

Beim Ausführungsbeispiel der Figuren 8 und 9 ist das Längenanpassteil 17 als Schraubteil ausgebildet. Der mit einem Au-ßengewinde versehene Einstellabschnitt 25 ist in die mit einem Innengewinde 34 versehene Führungshülse 34 eingeschraubt und kann zum Verändern der Stangenlänge weiter eingeschraubt oder herausgeschraubt werden. Durch eine auf dem Einstellabschnitt 25 sitzende Kontermutter 35, die mit der äußeren Stirnfläche der Führungshülse 24 verspannbar ist, lässt sich die gewünschte Einstellung fixieren. Zur Positionssicherung kann wiederum eine Klemmschelle 27 vorgesehen sein, die auf einen Kragen 36 der durchgängig mit einem Längsschlitz 37 versehenen Kontermutter 35 aufsetzbar ist und die Kontermutter mit dem Außengewinde des Einstellabschnittes 25 lösbar verspannen kann.

Eine Markierung 38 signalisiert bei dieser Ausführungsform die maximal zulässig herausgeschraubte Axialposition des Einstellabschnittes 25. Beispielsweise ist die Markierung 38 eine in den Einstellabschnitt 25 eingebrachte Umfangsnut.

Sowohl der Aufnahmekopf 18 als auch das Aufnahmeelement 22 sind stirnseitig mit einer sich axial erstreckenden Steckaufnahme 42 versehen, die ebenso Bestandteil einer mechanischen Schnittstelleneinrichtung 44 ist, wie ein in sie lösbar axial einsteckbarer Einsteckstutzen 43, der zu dem an dieser Stirnseite mit der Stangenstruktur 13 zu koppelnden Stützglied 14 gehört. Die Schnittstelleneinrichtung 44 ermöglicht in Richtung der Längsachse 12 eine leicht wieder lösbare Steckverbindung zwischen den beiden Stützgliedern 14 und der Stangenstruktur 13.

Zur lösbaren Befestigung an der jeweils zugeordneten Fahrzeugwand 7, 8 ist den beiden Stützgliedern 14 jeweils eine Haftverschlusseinrichtung 45 zugeordnet. Dies ermöglicht ein ortsfestes Fixieren der Haltestrebe 6 zwischen den beiden Fahrzeugwänden 7, 8, ohne dass ein Verspannen der Haltestrebe 6 mit den beiden Fahrzeugwänden 7, 8 erforderlich wäre.

Die beiden bevorzugt identisch ausgebildeten Stützglieder 14 enthalten eine einen erheblich größeren Querschnitt als die Stangenstruktur 13 aufweisende Befestigungsplatte 46, deren Plattenebene im Wesentlichen rechtwinkelig zu der Längsachse 12 verläuft, wenn das Stützglied 14 mit der Stangenstruktur 13 gekoppelt ist. Der Einsteckstutzen 43 ist an der Befestigungsplatte 46 fixiert und ragt von deren Rückseite weg. An ihrer entgegengesetzten, ebenfalls großflächigen Vorderseite ist die Befestigungsplatte 46 mit einer ersten Haftverschlussfläche 47 versehen, die sich zweckmäßigerweise über die gesamte Grundfläche der Befestigungsplatte 46 hinwegerstreckt. Eine zum haftenden Zusammenwirken damit ausgebildete zweite Haftverschlussfläche 48 befindet sich an der Vorderseite einer bezüglich dem Stützglied 14 gesonderten, flexibel ausgebildeten Haftverschlussmatte 52, die so ausgebildet ist, dass sie gemäß Pfeil 53 mit ihrer entgegengesetzten Rückseite 54 voraus an der zugeordneten Fahrzeugwand 7 festlegbar ist.

Dieses Festlegen kann sehr einfach durchgeführt werden, wenn die Haftverschlussmatte 52 an ihrer Rückseite 54 vollflächig mit einer Selbstklebeschicht 55 versehen ist, die leicht und fest an der Wandfläche der Fahrzeugwand 7, 8 adhäsiv haftet.

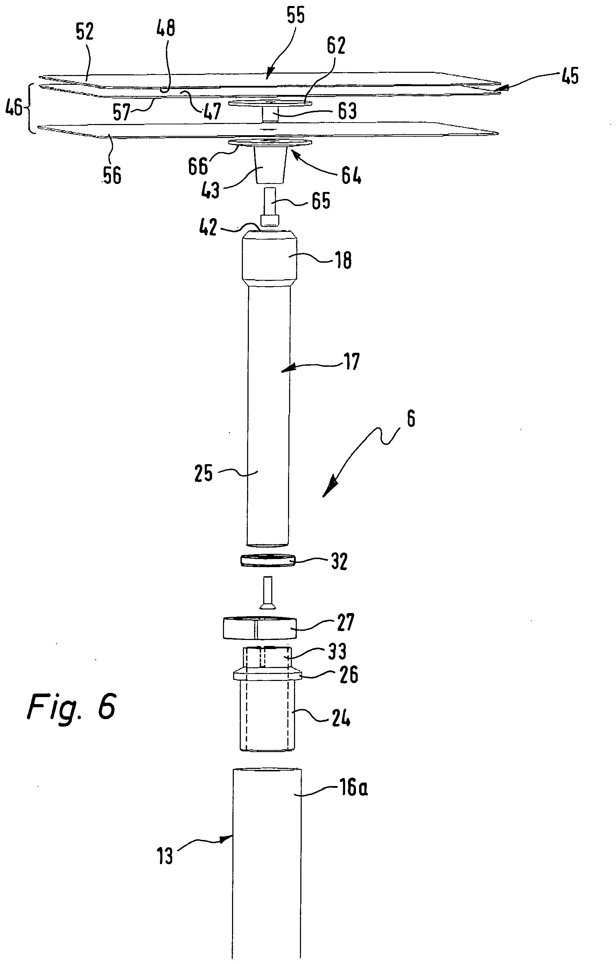

Die Befestigungsplatte 46 ist bevorzugt mehrschichtig aufgebaut und verfügt über eine rückseitige Tragschicht 56 und eine an ihrer Vorderseite angeordnete, die erste Haftverschlussfläche 47 definierende Haftschicht 57. Diese beiden Schichten 56, 57 sind durch eine in Figuren 6 und 9 nicht weiter dargestellte Klebeschicht 58 zu einer die Befestigungsplatte 46 bildenden Einheit verklebt.

Zur Fixierung des Einsteckstutzens 43 ist an zentraler Stelle zwischen die Tragschicht 56 und die Haftschicht 57 eine aus einem starren Material bestehende Stützplatte 62 eingebettet, von der radial mittig ein Befestigungsstutzen 63 absteht, der die Tragschicht 56 durchsetzt. Auf ihn ist von außen her ein den Einsteckstutzen 43 aufweisendes Kopplungsteil 64 aufgesetzt, das mittels einer von vorne her angesetzten koaxialen Schraube 65 mit dem Befestigungsstutzen 63 verschraubt ist. Die Tragschicht 56 wird dabei zwischen der Stützplatte 62 und der Basis des Kopplungsteils 64 eingespannt, wobei diese Basis zweckmäßigerweise als scheibenförmiger Abschnitt 66 ausgebildet ist, dessen Durchmesser demjenigen der Stützplatte 62 entsprechen kann.

Sowohl die Stützplatte 62 als auch der scheibenförmige Abschnitt 66 haben zweckmäßigerweise einen kreisförmigen Umriss, der allerdings wesentlich geringer ist als derjenige der Befestigungsplatte 46. Er ist insbesondere nur geringfügig größer wie der Querschnitt der Stangenstruktur 13.

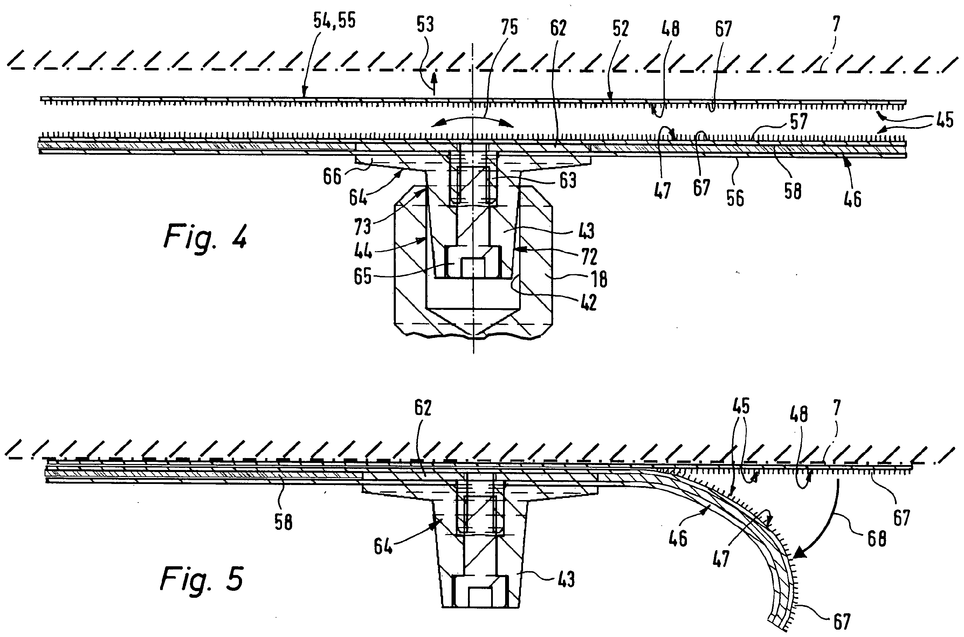

Die Befestigungsplatte 46 verfügt über biegeflexible Eigenschaften. Hierbei kann die Tragschicht 56 insbesondere aus einer Kunststofffolie bestehen oder aus einem Material, aus dem üblicherweise Abdeckplanen hergestellt werden. Am besten bewährt hat sich eine Ausführungsform, bei der die Befestigungsplatte 46 zwar formstabil ist, jedoch mit geringem Kraftaufwand reversibel umgebogen werden kann, wie dies in Figur 5 illustriert ist.

Die Stützplatte 62 kann im zentralen Bereich der Befestigungsplatte 46 zu einer Verstärkung der Struktur beitragen, insbesondere auch, um von der Stangenstruktur 13 in den Einsteckstutzen 43 eingeleitete Querkräfte großflächig und ohne Faltenbildung in die Befestigungsplatte 46 einzuleiten.

An dieser Stelle sei angemerkt, dass sich die erste Haftverschlussfläche 47 zweckmäßigerweise über die gesamte Befestigungsplatte 46 hinwegerstreckt, also auch im Bereich der Stützplatte 62.

Um eine Haltestrebe 6 im Fahrzeuginnenraum 1 zu montieren, hat sich folgende Vorgehensweise als besonders vorteilhaft erwiesen, wenngleich natürlich auch andere Handhabungsabfolgen möglich wären.

Zunächst klebt man an den beiden Fahrzeugwänden 7, 8 im Bereich der beabsichtigten Angriffspunkte der Haltestrebe 6 die Haftverschlussmatten 52 fest. Deren Größe wird dabei zweckmä-ßigerweise so gewählt, dass der Umriss demjenigen der Befestigungsplatte 46 im Wesentlichen entspricht. Anstelle je einer relativ großen Haftverschlussmatte 52 können jeweils auch mehrere kleinere Haftverschlussmatten 52a verwendet werden, wie dies in Figur 1 strichpunktiert angedeutet ist. Das Festkleben an der Fahrzeugwand 7, 8 gestaltet sich hierdurch in der Regel einfacher.

Als nächstes wird das eine Stützglied 14 gemäß Figur 7 an die untere Haftverschlussmatte 52 angesetzt, wobei die beiderseitigen Haftverschlussflächen 47, 48 in Hafteingriff miteinander gebracht werden. Die Stangenstruktur 13 ist hierbei zweckmäßigerweise noch nicht an das untere Stützglied 14 angekoppelt.

Als nächstes setzt man die durch Einfahren des Längenausgleichsteils 17 in ihrer Länge reduzierte Stangenstruktur 13 mit dem Aufnahmeelement 22 auf den nach oben ragenden Einsteckstutzen 43 des bereits befestigten unteren Stützgliedes 14 auf. Dies ist problemlos möglich, weil es sich um eine in axialer Richtung lose Steckverbindung handelt.

Zu diesem Zeitpunkt kann das obere Stützglied 14 bereits in den Aufnahmekopf 18 eingesteckt sein, so dass seine nach oben weisende erste Haftverschlussfläche 47 der zweiten Haftverschlussfläche 48 der an der zweiten Fahrzeugwand 8 festgeklebten Haftverschlussmatte 52 mit Abstand gegenüberliegt.

Nun kann durch Herausziehen des Längenanpassteils 17 aus der Hauptstange 15 die Länge der Stangenstruktur 13 an den zwischen den beiden Fahrzeugwänden 7, 8 herrschenden Abstand angepasst werden, wobei gleichzeitig das obere Stützglied 14 in Hafteingriff mit der oberen Haftverschlussmatte 52 gelangt. Ist diese Position erreicht, wird sie je nach Ausführungsbeispiel durch eine Klemmschelle 27 und/oder eine Kontermutter 35 fixiert bzw. gesichert.

Selbstverständlich kann man das obere Stützglied 14 auch unabhängig von der Stangenstruktur 13 an der zweiten Fahrzeugwand montieren und den Kopplungseingriff der oberen Schnittstelleneinrichtung 44 erst durch anschließendes Verlängern der Stangenstruktur 13 herstellen.

Von Vorteil ist, dass zum Herstellen und Aufrechterhalten der Haftverbindungen zwischen den miteinander kooperierenden Haftverschlussflächen 47, 48 kein besonderer Kraftaufwand erforderlich ist, der möglicherweise zu Beschädigungen in der Struktur der Fahrzeugwände 7, 8 führen könnte. Es genügt, die Befestigungsplatte 46 leicht an die Haftverschlussmatte 52 anzudrücken.

In diesem Zusammenhang ist es besonders vorteilhaft, wenn die Haftverschlusseinrichtung 45 entsprechend dem Ausführungsbeispiel als sogenannte Klettverschlusseinrichtung ausgebildet ist. Hier sind die miteinander kooperierenden Haftverschlussflächen 47, 48 mit lösbar miteinander verhakbaren Haftstrukturen 67 versehen. Geeignete Klettverschlusseinrichtungen sind in nahezu beliebigen Abmessungen auf dem Markt erhältlich und können problemlos auf das gewünschte Maß zugeschnitten werden.

Als miteinander kooperierende Haftstrukturen 67 können beispielsweise Haken- und Flauschstrukturen, Pilz- und Veloursstrukturen, Pilz- und Flauschstrukturen oder beiderseitig Pilzstrukturen gewählt werden.

Eine Klettverschlusseinrichtung hat gegenüber einer klebend arbeitenden Haftverschlusseinrichtung den Vorteil, dass sie weniger verschmutzungsanfällig ist und auch nach mehrmaligem Gebrauch voll funktionsfähig bleibt.

Die oben erwähnte Biegeflexibilität der Befestigungsplatte 46 hat den aus Figur 5 ersichtlichen Vorteil, dass sich die Befestigungsplatte 46 leicht wieder von der an Ort und Stelle verbleibenden zweiten Haftverschlussfläche 48 ablösen lässt, weil sie sich gemäß Pfeil 68 problemlos umbiegen lässt, um dann durch weitere Zugkraft abgezogen zu werden.

Diese Demontage eines Stützgliedes 14 erfolgt zweckmäßigerweise nachdem zuvor die Stangenstruktur 13 entfernt worden ist.

Wird eine Haltestrebe 6 nur kurzfristig nicht gebraucht, kann man die Stangenstruktur 13 durch axiales Zusammenfahren Ihrer Komponenten auch für sich allein entfernen, wobei die beiden Stützglieder 14 an Ort und Stelle verbleiben.

Wird auch ein Stützglied 14 wieder entfernt, kann die im Fahrzeug verbleibende zweite Haftverschlussfläche 48 bei Bedarf durch ein plattenförmiges Abdeckelement abgedeckt und vor Verschmutzung geschützt werden. Zur Fixierung an der zweiten Haftverschlussfläche 48 kann das Abdeckelement dann ebenfalls eine Haftverschlussfläche vergleichbar der ersten Haftverschlussfläche 47 des Stützgliedes 14 aufweisen.

Die axialen Abstützkräfte werden zwischen den Stützgliedern 14 und der Stangenstruktur 13 durch jeweils das Zusammenwirken eines Einsteckstutzens 43 mit einer Steckaufnahme 42 übertragen. Von Vorteil ist hierbei, wenn der Einsteckstutzen 43 eine sich von der Befestigungsplatte 46 weg zum freien Ende hin verjüngende konische Außenfläche 72 aufweist und die zugeordnete Steckaufnahme 42 so geformt ist, dass sich im ineinander eingesteckten Zustand der beiden Teile im Wesentlichen nur ein kreislinienförmiger Kontaktbereich 73 koaxial zu der Steckaufnahme 42 ausbildet.

Beim Ausführungsbeispiel erreicht man dies durch eine kreiszylindrisch geformte Steckaufnahme 42, deren Durchmesser geringfügig kleiner ist als derjenige des konischen Einsteckstutzens 43 in seinem Fußbereich 74 unmittelbar anschließend an den scheibenförmigen Abschnitt 66.

Auf diese Weise kann der Einsteckstutzen 43 fast über seine gesamte Länge in die Steckaufnahme 42 eintauchen und der Kontaktbereich 73 bildet sich an der Mündung der Steckaufnahme 42 aus, die bei dem Fußbereich 74 zu liegen kommt.

Durch diese Maßnahme ist zum einen die gewünschte axiale Verstrebung sichergestellt und wird zum anderen zugleich der Kontaktbereich 73 sehr nahe axial an die Befestigungsplatte 46 herangerückt. Der Kontaktbereich 73 ist derjenige Bereich, in dem die im Gebrauch der Haltestrebe 6 auf die Stangenstruktur 13 einwirkenden Querkräfte in das Stützglied 14 eingeleitet werden. Aufgrund des geringen Abstandes zur Befestigungsplatte 46 wirken die eingeleiteten Querkräfte mehr oder weniger nur als parallel zur Plattenebene orientierte Schubkräfte, die versuchen, die miteinander in Eingriff stehenden Haftverschlussflächen 47, 48 gegeneinander zu verschieben. Aufgrund des Hafteingriffes ist dies jedoch nicht möglich, so dass die Struktur stabil bleibt. Vermieden wird insbesondere, dass Biegemomente auf die Befestigungsplatte 46 wirken, die selbsttätig das in Figur 5 angedeutete Ablösen von der Haftverschlussmatte 52 hervorrufen könnten.

Das Zusammenwirken des konischen Einsteckstutzens 43 mit der zylindrischen Steckaufnahme 42 bewirkt im Übrigen auch einen vorteilhaften Zentriereffekt mit spielfreier Kopplung. Außerdem wird durch den Kontaktbereich 73 eine Gelenkstelle definiert, die es dem Stützglied 14 ermöglicht, relativ zur Stangenstruktur 13 gemäß Doppelpfeil 75 in jede Richtung leicht zu kippen. Dadurch lässt sich die Befestigungsplatte 46 geringfügig bezüglich der Längsachse 12 neigen, was eine selbsttätige Anpassung im Falle einer nicht exakt rechtwinkeligen Ausrichtung zulässt.

Das angestrebte gegenseitige flächenhafte Anschmiegen der beiden Haftverschlussflächen 47, 48 wird hier also sowohl durch die Flexibilität der Befestigungsplatte 46 als auch durch die möglichen Winkeländerungen gemäß Doppelpfeil 75 gewährleistet.

Bei allen Ausführungsbeispielen können die Haftverschlussflächen 47, 48 als Belag auf eine tragende Schicht aufgebracht sein.

Sind die ein und derselben Haltestrebe 6 zugeordneten mechanischen Schnittstelleneinrichtungen 44 identisch ausgebildet, können die einzelnen Stützglieder 14 wahlweise an der einen oder anderen Stirnseite der Stangenstruktur 13 angebracht werden, so dass sich ein sehr modularer Aufbau ergibt.

Während beim Ausführungsbeispiel die beiden Stützglieder 14 jeder Haltestrebe 6 identisch ausgebildet sind, besteht durchaus die Möglichkeit, an einer Stangenstruktur 13 zwei Stützglieder 14 anzubringen, deren Befestigungsplatten 46 sich in ihrer Flächengröße und/oder in ihrem Umriss voneinander unterscheiden. Auch können zur Fixierung der beiden Stützglieder 14 einer Haltestrebe 6 unterschiedlich konzipierte Haftverschlusseinrichtungen 45 zum Einsatz kommen.

## Patentansprüche

1. Haltevorrichtung für Fahrzeuginnenräume, insbesondere als Bestandteil eines Aufbewahrungssystems für in einem Fahrzeug mitzuführende Gegenstände, mit mindestens einer Haltestrebe (6), die eine längeneinstellbare Stangenstruktur (13) sowie zwei an den einander entgegengesetzten Stirnseiten der Stangenstruktur (13) angeordnete plattenförmige Stützglieder (14) aufweist und die lösbar derart in einem Fahrzeuginnenraum montierbar ist, dass sie sich zwischen zwei sich gegenüberliegenden Fahrzeugwänden (7, 8) erstreckt und sich mit ihren beiden Stützgliedern (14) flächenhaft an diesen Fahrzeugwänden (7, 8) abstützt, wobei einem oder beiden Stützgliedern (14) zur lösbaren Befestigung an der jeweils zugeordneten Fahrzeugwand (7, 8) eine Haftverschlusseinrichtung (45) mit lösbar miteinander verbindbaren Haftverschlussflächen (47, 48) zugeordnet ist, wobei die Haftverschlusseinrichtung (45) eine an der der Stangenstruktur (13) abgewandten Seite am Stützglied (14) angeordnete erste Haftverschlussfläche (47) sowie eine im Gebrauchszustand an der zugeordneten Fahrzeugwand (7, 8) angebrachte, zur lösbaren Haftverbindung mit der ersten Haftverschlussfläche (47) vorgesehene zweite Haftverschlussfläche (48) aufweist, **dadurch gekennzeichnet, dass** das plattenförmige Stützglied (14) eine Befestigungsplatte (46) aufweist, an deren der Stangenstruktur (13) abgewandter Vorderseite die erste Haftverschlussfläche (47) angeordnet ist und die über derartige biegeflexible Eigenschaften verfügt, dass sie zum Lösen der zwischen den beiden Haftverschlussflächen (47, 48) vorliegenden Haftverbindung durch Umbiegen und Ziehen von der zweiten Haftverschlussfläche (48) abziehbar ist.

2. Haltevorrichtung nach Anspruch 1, **dadurch gekennzeichnet, dass** die Haftverschlusseinrichtung (45) als Klettverschlusseinrichtung ausgebildet ist, deren Haftverschlussflächen (47, 48) über lösbar miteinander verhakbare Haftstrukturen (67) verfügen.

3. Haltevorrichtung nach Anspruch 1 oder 2, **dadurch gekennzeichnet, dass** die zweite Haftverschlussfläche (48) ein Bestandteil mindestens einer bezüglich dem zugeordneten Stützglied (14) gesonderten Haftverschlussmatte (52, 52a) ist, die zur lösbaren Befestigung an einer Fahrzeugwand (7, 8) ausgebildet ist.

4. Haltevorrichtung nach Anspruch 3, **dadurch gekennzeichnet, dass** die Haftverschlussmatte (52, 52a) flexibel biegbar ausgebildet ist, derart dass sie beim Anbringen an der Fahrzeugwand (7, 8) an deren Oberflächenverlauf anpassbar ist.

5. Haltevorrichtung nach Anspruch 3 oder 4, **dadurch gekennzeichnet, dass** die Haftverschlussmatte (52, 52a) an ihrer der zweiten Haftverschlussfläche (48) entgegengesetzten Rückseite mit einer das Festkleben an einer Fahrzeugwand (7, 8) ermöglichenden Selbstklebeschicht (55) versehen ist.

6. Haltevorrichtung nach einem der Ansprüche 1 bis 5, **dadurch gekennzeichnet, dass** die Befestigungsplatte (46) in ihrem in axialer Verlängerung der Stangenstruktur (13) liegenden Bereich mit einer einen kleineren Umriss als die Befestigungsplatte (46) aufweisenden starren Stützplatte (62) versehen ist.

7. Haltevorrichtung nach Anspruch 6, **dadurch gekennzeichnet, dass** die Stützplatte (62) in die Befestigungsplatte (46) eingebettet ist.

8. Haltevorrichtung nach Anspruch 6 oder 7, **dadurch gekennzeichnet, dass** sich die erste Haftverschlussfläche (47) über die Stützplatte (62) hinweg erstreckt.

9. Haltevorrichtung nach einem der Ansprüche 1 bis 8, **dadurch gekennzeichnet, dass** einem oder beiden Stützgliedern (14) an der Haltestrebe (6) eine mechanische Schnittstelleneinrichtung (44) zur lösbaren mechanischen Kopplung mit der Stangenstruktur (13) zugeordnet ist.

10. Haltevorrichtung nach Anspruch 9, **dadurch gekennzeichnet, dass** die mechanische Schnittstelleneinrichtung (44) zur Ermöglichung einer in der axialen Richtung der Stangenstruktur (13) erfolgenden Steckverbindung zwischen dem Stützglied (14) und der Stangenstruktur (13) ausgebildet ist.

11. Haltevorrichtung nach Anspruch 9 oder 10, **dadurch gekennzeichnet, dass** die mechanische Schnittstelleneinrichtung (44) einen am Stützglied (14) angeordneten Einsteckstutzen (43) und eine stirnseitig an der Stangenstruktur (13) angeordnete Steckaufnahme (42) für den Einsteckstutzen (43) aufweist.

12. Haltevorrichtung nach Anspruch 11, **dadurch gekennzeichnet, dass** der Einsteckstutzen (43) eine sich in Richtung zu seinem freien Ende verjüngende konische Außenfläche (72) aufweist und die Steckaufnahme (42) so geformt ist, das sich zwischen der Steckaufnahme (42) und dem darin eingesteckten Einsteckstutzen (43) ein zu der Steckaufnahme koaxialer kreislinienförmiger Kontaktbereich (73) ausbildet.

13. Haltevorrichtung nach Anspruch 12, **dadurch gekennzeichnet, dass** die Steckaufnahme (42) derart gestaltet ist, dass der kreislinienförmige Kontaktbereich an der Mündung der Steckaufnahme (42) liegt.

14. Haltevorrichtung nach Anspruch 12 oder 13, **dadurch gekennzeichnet, dass** die Steckaufnahme (42) so gestaltet ist, dass der kreislinienförmige Kontaktbereich an dem sich an die Befestigungsplatte (46) anschließenden Fußbereich (74) des Einsteckstutzens (43) angeordnet ist.

15. Haltevorrichtung nach einem der Ansprüche 12 bis 14, **dadurch gekennzeichnet, dass** die Steckaufnahme (42) kreiszylindrisch gestaltet ist, wobei ihr Durchmesser größer ist als der kleinste Durchmesser der konischen Außenfläche (72) und zugleich kleiner als der größte Durchmesser der konischen Außenfläche (72).

16. Haltevorrichtung nach einem der Ansprüche 11 bis 15 in Verbindung mit einem der Ansprüche 6 bis 10, **dadurch gekennzeichnet, dass** der Einsteckstutzen (43) mit der Stützplatte (62) fest verbunden und insbesondere verschraubt ist.

17. Haltevorrichtung nach einem der Ansprüche 1 bis 16, **dadurch gekennzeichnet, dass** die Stangenstruktur (13) eine Hauptstange (15) und ein mit der Hauptstange (15) axial verstellbar in Eingriff stehendes, in unterschiedlichen Axialpositionen relativ zur Hauptstange (15) festsetzbares Längenanpassteil (17) aufweist.

18. Haltevorrichtung nach Anspruch 17, **dadurch gekennzeichnet, dass** das Längenanpassteil (17) als Schraubteil oder als Verschiebeteil ausgebildet ist.

19. Haltevorrichtung nach Anspruch 17 oder 18, **gekennzeichnet durch** eine zur lösbaren Fixierung der eingestellten Länge der Stangenstruktur (13) mit dem Längenanpassteil (17) verspannbare Klemmschelle (27).

20. Haltevorrichtung nach einem der Ansprüche 1 bis 19, **gekennzeichnet durch** mehrere voneinander unabhängige Haltestreben (6).

## Claims

1. A retaining device for vehicle interiors, in particular as a component of a storage system for objects to be carried in a vehicle, having at least one retaining strut (6), which has a longitudinally adjustable rod structure (13), as well as two plate-shaped support members (14) arranged at two oppositely located front ends of the rod structure (13), and which can be releasably mounted in a vehicle interior in such a way that it extends between two oppositely located vehicle walls (7, 8) and, by means of its two support members (14), it is supported flush on these vehicle walls (7, 8), wherein an adhesive closure device (45), having adhesive closure faces (47, 48), which can be releasably connected with each other, is assigned to one or both support members (14) for the releasable fastening on the respectively assigned vehicle wall (7, 8), wherein the adhesive closure device (45) has a first adhesive closure face (47) arranged on the support member (14) on the side facing away from the rod structure (13), as well as a second adhesive closure face (48), attached when in the state of use to the assigned vehicle wall (7, 8) and provided for the releasable adhesive connection with the first adhesive closure face (47), **characterized in that** the plate-shaped support member (14) has a fastening plate (46), on whose front facing away from the rod structure (13) the first adhesive closure face (47) is arranged and which fastening plate has flexible bending properties in such a way that, by bending and pulling, it can be pulled off the second adhesive closure face (48) for releasing the adhesive connection existing between the two adhesive closure faces (47, 48).

2. The retaining device in accordance with claim 1, **characterized in that** the adhesive closure device (45) is embodied in the form of a hook-and-loop closure arrangement, whose adhesive closure faces (47, 48) have adhesive structures (67), which can be releasably hooked together.

3. The retaining device in accordance with claim 1 or 2, **characterized in that** the second adhesive closure face (48) is a component of at least one adhesive closure mat (52, 52a), which is separate in respect to the associated support member (14), and is embodied for releasable fastening on a vehicle wall (7, 8).

4. The retaining device in accordance with claim 3, **characterized in that** the adhesive closure mat (52, 52a) is embodied to be flexibly bendable in such a way that, on attaching it to the vehicle wall (7, 8), it can be adapted to the shape of the surface of the latter.

5. The retaining device in accordance with claim 3 or 4, **characterized in that**, on its back opposite the second adhesive closure face (48), the adhesive closure mat (52, 52a) is provided with a self-adhesive layer (55), which makes gluing it to a vehicle wall (7, 8) possible.

6. The retaining device in accordance with anyone of claims 1 to 5, **characterized in that** in its area located in the axial extension of the rod structure (13), the fastening plate (46) is provided with a rigid support plate (62) having a smaller contour than the fastening plate (46).

7. The retaining device in accordance with claim 6, **characterized in that** the support plate (62) is embedded in the fastening plate (46).

8. The retaining device in accordance with claim 6 or 7, **characterized in that** the first adhesive closure face (47) extends across the support plate (62).

9. The retaining device in accordance with anyone of claims 1 to 8, **characterized in that** a mechanical interface arrangement (44) for the releasable mechanical coupling with the rod structure (13) is assigned to one or both support members (14) on the retaining strut (6).

10. The retaining device in accordance with claim 9, **characterized in that** the mechanical interface arrangement (44) is embodied for making possible a plug-in connection, taking place in the axial direction, of the rod structure (13) between the support member (14) and the rod structure (13).

11. The retaining device in accordance with claim 9 or 10, **characterized in that** the mechanical interface arrangement (44) has a plug-in connecting piece (43) arranged on the support member (14), and a plug-in receptacle (42), arranged on the front of the rod structure (13), for the plug-in connecting piece (43).

12. The retaining device in accordance with claim 11, **characterized in that** the plug-in connecting piece (43) has a conical exterior face (72) tapering in the direction towards its free end, and the plug-in receptacle (42) is shaped in such a way that a contact area (73) in the shape of a circular line is formed coaxially in relation to the plug-in receptacle between the plug- in receptacle (42) and the plug-in connecting piece (43) plugged into it.

13. The retaining device in accordance with claim 12, **characterized in that** the plug-in receptacle (42) is designed in such a way that the contact area in the shape of a circular line is located at the mouth of the plug-in receptacle (42).

14. The retaining device in accordance with claim 12 or 13, **characterized in that** the plug-in receptacle (42) is designed in such a way that the contact area in the shape of a circular line is arranged on the base area (74) of the plug-in receptacle (43) adjoining the fastening plate (46).

15. The retaining device in accordance with anyone of claims 12 to 14, **characterized in that** the plug-in receptacle (42) is embodied to be circular-cylindrically, wherein its diameter is larger than the smallest diameter of the conical exterior face (72) and simultaneously smaller than the largest diameter of the conical exterior face (72).

16. The retaining device in accordance with anyone of claims 11 to 15 in connection with anyone of claims 6 to 10, **characterized in that** the plug-in receptacle (43) is fixedly connected, and in particular screwed together, with the support plate (62).

17. The retaining device in accordance with anyone of claims 1 to 16, **characterized in that** the rod structure (13) has a main rod (15) and a length-adaptation element (17), which is in an axially displaceable engagement with the main rod (15) and can be fixed in place in different axial positions relative to the main rod (15).

18. The retaining device in accordance with claim 17, **characterized in that** the length-adaptation element (17) is embodied as a screw element or a displaceable element.

19. The retaining device in accordance with claim 17 or 18, **characterized by** a clamping clip (27), which can be clamped together with the length-adaptation element (17) for the releasable fixation of the set length of the rod structure (13).

20. The retaining device in accordance with one of claims 1 to 19, **characterized by** a plurality of retaining struts (6), which are independent of each other.

## Revendications

1. Dispositif de retenue pour habitacles de véhicules, en particulier en tant qu'élément constitutif d'un système de rangement pour objets à transporter dans un véhicule, avec au moins un montant de retenue (6), qui présente une structure de tige réglable en longueur (13) ainsi que deux organes d'appui (14) en forme de plaque agencés au niveau des côtés frontaux opposés l'un à l'autre de la structure de tige (13) et qui peut être monté de manière amovible dans un habitacle de véhicule de telle sorte qu'il s'étend entre deux parois de véhicule (7, 8) opposées et s'appuie en surface avec ses deux organes d'appui (14) sur ces parois de véhicule (7, 8), dans lequel un dispositif à fermeture agrippante (45) avec des surfaces à fermeture agrippante (47, 48) pouvant être reliées l'une à l'autre de manière amovible est associé à un ou aux deux organes d'appui (14) pour la fixation amovible à la paroi de véhicule (7, 8) respectivement associée, dans lequel le dispositif à fermeture agrippante (45) présente une première surface à fermeture agrippante (47) agencée au niveau du côté opposé à la structure de tige (13) sur l'organe d'appui (14) ainsi qu'une deuxième surface à fermeture agrippante (48) montée à l'état d'utilisation au niveau de la paroi de véhicule associée (7, 8), prévue pour la liaison adhésive amovible avec la première surface à fermeture agrippante (47), **caractérisé en ce que** l'organe d'appui (14) en forme de plaque présente une plaque de fixation (46), sur lequel côté avant opposé à la structure de tige (13), la première surface à fermeture agrippante (47) est agencée et qui dispose de telles propriétés souples en flexion qu'elle peut être retirée pour le détachement de la liaison adhésive présente entre les deux surfaces à fermeture agrippante (47, 48) par pliage et retrait de la deuxième surface à fermeture agrippante (48).

2. Dispositif de retenue selon la revendication 1, **caractérisé en ce que** le dispositif à fermeture agrippante (45) est réalisé en tant que dispositif à fermeture auto-agrippante, dont les surfaces à fermeture agrippante (47, 48) disposent de structures adhésives (67) pouvant s'accrocher entre elles de manière amovible.

3. Dispositif de retenue selon la revendication 1 ou 2, **caractérisé en ce que** la deuxième surface à fermeture agrippante (48) est un élément constitutif d'au moins un tapis à fermeture agrippante (52, 52a) séparé par rapport à l'organe d'appui (14) associé, qui est réalisé pour la fixation amovible sur une paroi de véhicule (7, 8).

4. Dispositif de retenue selon la revendication 3, **caractérisé en ce que** le tapis à fermeture agrippante (52, 52a) est réalisé de manière souple en flexion de telle sorte qu'il peut être adapté lors du montage sur la paroi de véhicule (7, 8) au tracé de sa surface.

5. Dispositif de retenue selon la revendication 3 ou 4, **caractérisé en ce que** le tapis à fermeture agrippante (52, 52a) est doté au niveau de son côté arrière opposé à la deuxième surface à fermeture agrippante (48) d'une couche autocollante (55) permettant le collage sur une paroi de véhicule (7, 8).

6. Dispositif de retenue selon l'une quelconque des revendications 1 à 5, **caractérisé en ce que** la plaque de fixation (46) est dotée dans sa zone située dans le prolongement axial de la structure de tige (13) d'une plaque d'appui (62) rigide présentant un contour plus petit que la plaque de fixation (46).

7. Dispositif de retenue selon la revendication 6, **caractérisé en ce que** la plaque d'appui (62) est intégrée dans la plaque de fixation (46).

8. Dispositif de retenue selon la revendication 6 ou 7, **caractérisé en ce que** la première surface à fermeture agrippante (47) s'étend au-delà de la plaque d'appui (62).

9. Dispositif de retenue selon l'une quelconque des revendications 1 à 8, **caractérisé en ce qu'**un dispositif d'interface mécanique (44) pour le couplage mécanique amovible à la structure de tige (13) est associé à un ou aux deux organes d'appui (14) au niveau du montant de retenue (6).

10. Dispositif de retenue selon la revendication 9, **caractérisé en ce que** le dispositif d'interface mécanique (44) est réalisé pour permettre une liaison d'enfichage ayant lieu dans la direction axiale de la structure de tige (13) entre l'organe d'appui (14) et la structure de tige (13).

11. Dispositif de retenue selon la revendication 9 ou 10, **caractérisé en ce que** le dispositif d'interface mécanique (44) présente un embout d'enfichage (43) agencé au niveau de l'organe d'appui (14) et un logement d'enfichage (42) agencé côté frontal au niveau de la structure de tige (13) pour l'embout d'enfichage (43).

12. Dispositif de retenue selon la revendication 11, **caractérisé en ce que** l'embout d'enfichage (43) présente une surface extérieure conique (72) se rétrécissant en direction de son extrémité libre et le logement d'enfichage (42) est formé de telle sorte qu'une zone de contact circonférentielle (73) coaxiale au logement d'enfichage est réalisée entre le logement d'enfichage (42) et l'embout d'enfichage (43) qui y est enfiché.

13. Dispositif de retenue selon la revendication 12, **caractérisé en ce que** le logement d'enfichage (42) est configuré de telle sorte que la zone de contact circonférentielle se situe à l'embouchure du logement d'enfichage (42).

14. Dispositif de retenue selon la revendication 12 ou 13, **caractérisé en ce que** le logement d'enfichage (42) est configuré de sorte que la zone de contact circonférentielle est agencée au niveau de la zone de pied (74) de l'embout d'enfichage (43) se raccordant à la plaque de fixation (46).

15. Dispositif de retenue selon l'une quelconque des revendications 12 à 14, **caractérisé en ce que** le logement d'enfichage (42) est configuré de manière cylindrique circulaire, dans lequel son diamètre est plus grand que le plus petit diamètre de la surface extérieure conique (72) et en même temps plus petit que le plus grand diamètre de la surface extérieure conique (72).

16. Dispositif de retenue selon l'une quelconque des revendications 11 à 15 en relation avec l'une quelconque des revendications 6 à 10, **caractérisé en ce que** l'embout d'enfichage (43) est relié fixement à la plaque d'appui (62) et est en particulier vissé.

17. Dispositif de retenue selon l'une quelconque des revendications 1 à 16, **caractérisé en ce que** la structure de tige (13) présente une tige principale (15) et un adaptateur de longueur (17) en prise axialement réglable avec la tige principale (15), pouvant être fixé dans différentes positions axiales par rapport à la tige principale (15).

18. Dispositif de retenue selon la revendication 17, **caractérisé en ce que** l'adaptateur de longueur (17) est réalisé en tant qu'élément de vissage ou en tant qu'élément coulissant.

19. Dispositif de retenue selon la revendication 17 ou 18, **caractérisé par** un collier de serrage (27) pouvant être serré pour la fixation amovible de la longueur réglée de la structure de tige (13) avec l'adaptateur de longueur (17).

20. Dispositif de retenue selon l'une quelconque des revendications 1 à 19, **caractérisé par** plusieurs montants de retenue (6) indépendants les uns des autres.
